**Europäisches Patentamt**

**European Patent Office**

**Office européen des brevets**

(19)

(11) Numéro de publication: **0 247 398**
**B1**

(12)

# FASCICULE DE BREVET EUROPEEN

(45) Date de publication du fascicule du brevet:
24.01.90

(51) Int. Cl.⁴: **F16N 7/38**, F16N 29/02

(21) Numéro de dépôt: 87106537.1

(22) Date de dépôt: 06.05.87

(54) Commande électronique d'installation de graissage centralisée, en particulier pour vehicules.

(30) Priorité: 29.05.86 FR 8607749

(43) Date de publication de la demande:
02.12.87 Bulletin 87/49

(45) Mention de la délivrance du brevet:
24.01.90 Bulletin 90/4

(84) Etats contractants désignés:
BE CH DE ES GB IT LI LU NL

(56) Documents cités:
EP-A- 0 131 910
DE-A- 1 405 442
DE-B- 1 675 170
FR-E- 50 240
GB-A- 2 046 371
GB-A- 2 153 570
US-A- 3 985 205

(73) Titulaire: **CONSORTIUM DE RECHERCHES POUR
L'APPLICATION DES FLUIDES, CRAF, Les Clos
des 4 Vents, F-49650 Brain sur Allonnes(FR)**

(72) Inventeur: **Javelly, Christian, Le Moulin de la Motte,
F-49650 Allonnes(FR)**
Inventeur: **Paris, René, 8 Chemin du Bois Brard Saint
Hilaire Saint Florent, F-49400 Saumur(FR)**

(74) Mandataire: **Casalonga, Axel et al, BUREAU D.A.
CASALONGA - JOSSE Morassistrasse 8,
D-8000 München 5(DE)**

## Description

L'invention concerne les installations de graissage centralisées de machines, en particulier de véhicules, dans lesquelles une pompe est commandée par intermittence pour envoyer du lubrifiant sous pression à un certain nombre de distributeurs envoyant des quantités dosées de ce lubrifiant vers le divers points à graisser, avec contrôle du fonctionnement par un pressostat détectant l'arrivée de la pression en bout du circuit. Il est donc nécessaire de pouvoir décompter le temps d'utilisation, de régler l'intervalle voulu entre deux graissages, de déclencher le fonctionnement de la pompe chaque fois que ce temps est décompté, et de revenir en position de repos sur commande du pressostat.

On connaît déjà, notamment d'après le document US-A 3 985 205, un dispositif de commande d'une installation de graissage centralisée comportant une pompe d'alimentation commandée électriquement par intermittence à des intervalles de temps déterminés, et un compteur électronique comportant une entrée de remise à zéro et une sortie qui devient active au bout d'un temps déterminé. La commande est sous la dépendance d'un pressostat de contrôle de la pression en bout de ligne.

On connaît également, d'après le document DE-B 1 675 170, un circuit électronique destiné à remplir une telle fonction à l'aide d'une bascule de graissage dont l'entrée de commande est actionnée par la sortie d'un ensemble de compteurs binaires, dont l'entrée de remise à zéro est actionnée par un système de contrôle du graissage, et dont la sortie actionne la remise à zéro des compteurs et la commande de la pompe par un amplificateur.

Toutefois ces dispositifs sont alimentés électriquement, soit en permanence et continuent alors inutilement le graissage automatique périodique pendant les périodes d'arrêt du véhicule, soit le plus souvent par l'intermédiaire du contact général du véhicule et dans ce cas le compteur redémarre à zéro après chaque arrêt du véhicule de sorte que les véhicules à arrêts fréquents ne sont pratiquement jamais lubrifiés par cette commande automatique.

Le but de l'invention est d'éliminer les inconvénients précédents en réalisant un dispositif de temporisation électronique qui permette de commander manuellement le déclenchement de cycles supplémentaire de graissage en plus du graissage automatique periodique.

L'invention utilise un compteur numérique comportant une base de temps et une sortie de commande principale, de préférence réglable, ainsi qu'une bascule de graissage dont l'entrée de commande est commandée par ladite sortie du compteur, l'entrée de remise à zéro étant commandée par le signal venu du pressostat, et la sortie directe de cette bascule actionnant tout à la fois la remise à zéro du compteur et la commande du graissage, pompe où électrovanne, par l'intermédiaire d'une amplification appropriée telle qu'un transistor et un relais.

Le dispositif selon l'invention comporte en outre une commande de cycle additionnel qui est raccordée sur l'entrée de commande de la bascule de graissage en parallèle avec la sortie provenant du compteur.

Il est prévu de préférence également une commande manuelle de purge automatique qui agit sur l'entrée de commande d'une bascule de purge dont l'entrée de remise à zéro est actionnée par une commande de fin de purge, la sortie directe de cette bascule de purge actionnant à l'aide d'une porte logique la transmission vers l'amplification de sortie de graissage des impulsions provenant d'une sortie intermédiaire du compteur, à cycle plus rapide, correspondant au fonctionnement intermittent ininterrompu du graissage, cette porte agissant en parallèle avec une autre porte dont les entrées sont connectées respectivement à la sortie directe de la bascule de graissage et à la sortie inverse de la bascule de purge.

Le dispositif comporte de préférence un voyant en parallèle avec l'amplification de sortie de graissage et un autre voyant en parallèle avec l'entrée de commande du pressostat pour un contrôle visuel, ainsi qu'une temporisation retardant l'actionnement de la remise à zéro de la bascule de graissage par le presostat.

Les trois commandes manuelles, de cycle additionnel, de purge automatique et de fin de purge, sont de préférence assurées par un seul bouton fermant un circuit qui agit à la fois sur l'entrée directe de la bascule de graissage, en parallèle avec la sortie principale du compteur, et par l'intermédiaire d'une porte logique sur l'entrée de commande directe de la bascule de purge par l'intermédiaire d'un circuit intégrateur, et sur l'entrée de remise à zéro de cette même bascule de purge par un circuit dérivateur, l'entrée de remise à zéro de la bascule de graissage étant commandée, en parallèle avec la commande temporisée du pressostat, par la sortie directe de la bascule de purge par l'intermédiaire d'une résistance appropriée, de telle manière qu'une pression longue sur le bouton de commande produise l'établissement de la bascule de purge dans sa position de purge, tandis qu'une pression de courte durée produise son retour en position de repos pour graissage automatique.

Enfin l'alimentation de cette commande unique est de préférence assurée par l'intermédiaire du contact du véhicule, tandis qu'une alimentation directe est prévue pour les composants actifs du dispositif.

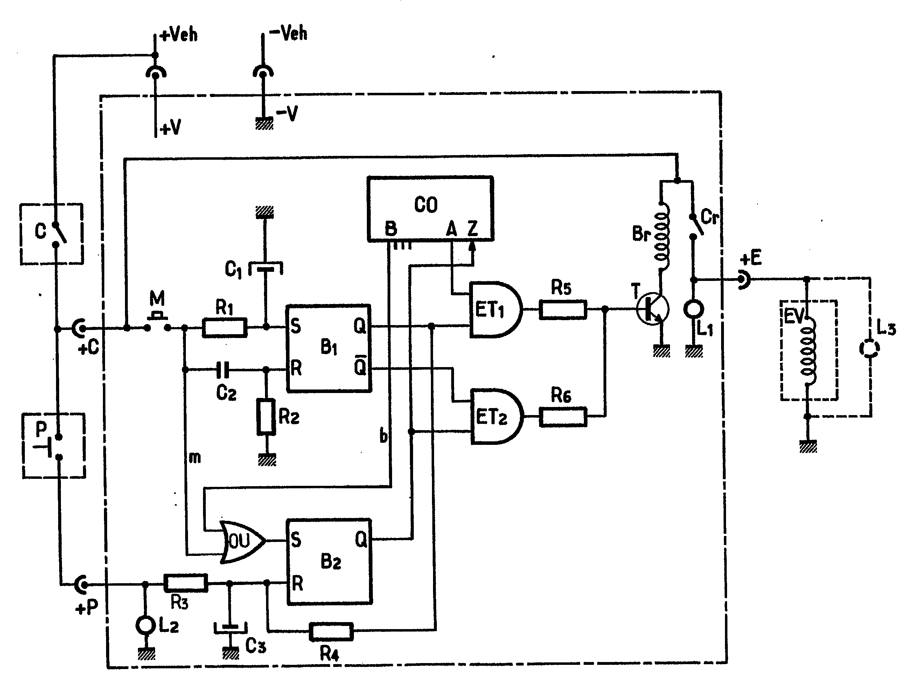

D'autres particularités de l'invention apparaîtront dans la description qui va suivre d'un mode de réalisation pris comme exemple et représenté sur le dessin annexé, sur lequel la figure unique représente le schéma général de la commande.

On voit sur la figure le compteur électronique numérique binaire CO, comportant sa propre base de temps qui n'a pas besoin d'être d'une extrême précision, une entrée Z de remise à zéro, et une sortie principale B qui devient active au bout d'un temps relativement long et de préférence réglable. A titre d'exemple, on peut grouper les quatre dernières décades binaires, représentant respectivement des durées de 2 heures, 1 heure, 1/2 heure et 1/4 d'heure, à l'aide d'un microcommutateur multiple (dip-switch) qui permette de sélectionner et éventuellement d'additionner ces temps de manière à obtenir tous les temps de 1/4 d'heure en 1/4 d'heure compris entre 1/4 d'heure et 3 heures 3/4.

On voit également la bascule électronique de graissage B2 dont l'entrée de commande S est raccordée au travers d'une porte OU par une ligne b à B. La sortie directe Q de cette bascule est connectée d'une part à la remise à zéro Z du compteur CO, et d'autre part, directement ou par intermédiaire d'une porte ET2 dont on verra le rôle par la suite et d'une résistance R6, à la base d'un transistor T alimentant la bobine Br d'un relais dont le contact Cr alimente la sortie +E, avec un voyant de contrôle L1 monté en parallèle.

Dans le cas le plus fréquent où l'installation de graissage est montée sur un camion disposant à bord d'une installation d'air comprimé, la pompe de graissage peut avantageusement être une pompe actionnée par l'air comprimé, et la commande +E est connectée à l'extérieur du dispositif à une simple électrovanne EV distribuant cet air comprimé. à la pompe. Un voyant supplémentaire L3 peut éventuellement être également monté en dérivation pour un contrôle local. Naturellement dans le cas où le véhicule ou l'installation de graissage ne dispose pas d'air comprimé, on peut utiliser une pompe électrique raccordée directement à la sortie de commande +E.

Lorsque cette pompe est ainsi actionnée, au bout du temps préréglé, elle envoie en début de ligne la pression de fluide qui produit, à l'aide d'un dispositif connu et non représenté, la distribution du fluide lubrifiant aux divers points à graisser et dans des quantités préréglées, et un pressostat P installé en fin de ligne vérifie que toutes les distributions ont été efectuées.

On voit sur la figure le contact du pressostat P qui alimente une borne d'entrée +P du dispositif, laquelle est reliée par une résistance R3 à l'entrée de remise à zéro R de la bascule de graissage B2, ce qui a donc pour effet lorsque P se ferme de remettre le relais au repos et donc de couper l'alimentation de l'électrovanne EV. Un autre voyant de contrôle L2 est de préférence installé en dérivation sur cette entrée +P, et un condensateur C3 est monté en aval de la résistance R3 pour constituer avec celle-ci un temporisateur qui retarde de quelques secondes la remise à zéro de B2 lorsque la pression est établie dans le pressostat P. Ceci par mesure de sécurité pour être sûr que la pression soit complètement établie, et également pour laisser le temps au voyant L2 d'être observé. En effet, l'arrêt de l'électrovanne EV conduit au bout d'un temps plus ou moins long, dépendant de l'installation, à la chute de la pression en ligne, donc à l'ouverture du contact P.

Tout ce qui précède correspond donc à un fonctionnement entièrement automatique des cycles de graissage à des intervalles dont la valeur est préréglée. Dans bien des cas on désire également pouvoir déclencher à volonté des cycles de graissage supplémentaires par une intervention manuelle. Pour cela, il suffit de disposer d'un bouton-poussoir M, alimenté par l'entrée +C du dispositif raccordé au plus du véhicule Veh par l'intermédiaire du contact à clef C du véhicule, et alimentant par une ligne m l'entrée S de la bascule B2, en parallèle avec la ligne b, par l'intermédiaire de la porte OU. Dans ce cas, cette action manuelle provoque, sans attendre l'envoi de l'impulsion B, l'exécution d'un graissage supplémentaire qui se déroule comme le graissage automatique.

A titre de perfectionnement, on désire pouvoir effectuer automatiquement la purge de l'installation après sa première mise en service, ou après chaque répa ration éventuelle ayant vidé partiellement les canalisations de lubrifiant, afin de chasser tout l'air contenu.

Pour cela, on dispose sur le compteur CO d'une sortie intermédiaire supplémentaire A sur une décade binaire d'un poids beaucoup plus faible pour fournir des signaux carrés comportant des temps d'établissement d'environ 7 secondes, séparés par des temps d'interruption de même durée. En outre, on utilise une bascule de purge B1 semblable à la bascule de graissage B2, dont la sortie inverse Q alimente la deuxième entrée de la porte ET2 indiqué précédemment, de manière à permettre le fonctionnement automatique seulement lorsque B1 est au repos, et dont la sortie directe Q alimente l'entrée d'une porte ET1 dont la deuxième entrée est raccordée sur la sortie A du compteur, la sortie de cette porte ET1 alimentant par une résistance R5, en parallèle avec R6, la base de commande du transistor T alimentant à son tour le relais.

Il suffit donc de mettre temporairement sous tension l'entrée de commande S de la bascule de purge B1 pour provoquer un cycle de purge avec fonctionnement intermittent de l'électrovanne EV, à raison de 7 secondes de marche pour 7 secondes d'interruption, et ceci d'une manière ininterrompue, et d'envoyer une impulsion d'interruption sur l'entrée de remise à zéro R de cette bascule B1 pour interrompre ce processus.

On pourrait donc, en plus de la commande manuelle M de déclenchement des cycles additionnels, disposer de deux commandes manuelles supplémentaires pour actionner respectivement la commande de purge automatique et la commande de fin de purge. Toutefois, à titre de perfectionnement, on peut avantageusement selon l'invention, utiliser un bouton de commande unique M remplissant les trois fonctions. Pour cela, on dispose entre M et l'entrée de commande S de la bascule de purge B1, un circuit intégrateur formé d'une résistance R1 et d'un condensateur C1 dont la charge progressive permet de ne faire monter que très lentement le niveau de la commande S. D'autre part, entre M et l'entrée de remise à zéro R, on dispose d'un circuit dérivateur R2, C2 agencé au contraire pour que le courant initial de charge du condensateur C2 produise immédiatement sur R une polarisation par R2, celle-ci tombant rapidement à zéro dès que le condensateur est chargé. D'autre part, les lignes de commande précédentes b et m arrivent en parallèle sur les entrées d'une porte OU dont la sortie est raccordée à l'entrée S de B2. Enfin, on réunit la sortie directe Q de B1 à l'entrée de remise à zéro R de B2 par l'intermédiaire d'une ligne de jonction incluant une résistance R4.

Grâce à cet agencement, une action brève sur le bouton M continue à produire comme précédemment le déclenchement de cycles de graissage supplémentaires avec interruption par le pressostat, la bascule B1 étant dans ce cas au repos, de sorte que l'impulsion de tension envoyée sur R ne produit aucun effet.

Par contre, si l'on appuie sur le bouton M un temps suffisant (environ 10 secondes par exemple) pour que le circuit R1, C1 produise la mise en service de la bascule de purge B1, on produit alors le cycle intermittent ininterrompu de purge de la manière indiquée précédemment. La jonction passant par R4 assure dans ces conditions la remise à zéro de la bascule B2 et la charge du condensateur C3. Lorsqu'on veut interrompre le cycle de purge, une brève impulsion sur le bouton M produit alors un effet positif sur la commande de remise à zéro R par R2, C2, ce qui remet le dispositif dans les conditions de marche initiale. Au cours de cette brève impulsion, l'entrée S de B2 se trouve alimentée, mais en même temps son entrée R continue à être alimentée par la charge de C3, ce qui suffit à maintenir ou à remettre la bascule B2 au repos, au moins après la brève impulsion sur M.

Pour conserver en mémoire les valeurs et états précédemment établis, les divers composants actifs, CO, B1, B2, ET1, ET2 et OU, sont de préférence alimentés directement à partir d'une entrée +V provenant du +véhicule sans passer par le contact C. Au contraire, la bobine Br et le contact Cr du relais sont de préférence alimentés par l'intermédiaire de l'entrée +C.

La sécurité de fonctionnement du dispositif est assurée par un simple contrôle visuel des voyants L1 et L2. En effet, l'allumage du voyant de contrôle L1 à chaque cycle automatique ou sur commande manuelle M doit être suivi au bout d'un certain temps de l'allumage du voyant L2, lequel doit à son tour s'éteindre au bout d'un temps réduit. Le non allumage de l'un ou l'autre des voyants L1, L2 ou leur allumage permanent, simultané ou non, avertit immédiatement l'usager d'un défaut de fonctionnement.

Enfin, tout le dispositif selon l'invention, délimité par l'encadré en traits mixtes sur la figure, peut aisément être miniaturisé à l'aide d'un petit nombre de composants et de circuit intégrés, de manière à tenir dans un très petit boîtier qui peut être disposé sous le tableau de bord, sa façade visible ne comportant que les voyants L1, L2 et le bouton M, ce qui simplifie considérablement l'installation, les cinq raccordements +V, -V, +C, +P et +E étant groupés sur l'arrière.

## Revendications

1. Dispositif de commande d'une installation de graissage centralisée comportant une pompe d'alimentation commandée directement ou indirectement par voie électrique (+E) et par intermittence avec des intervalles de temps prédéterminés, et un compteur électronique numérique (CO) comportant une entrée de remise à zéro (Z) et une sortie principale (B) qui devient active au bout d'un temps déterminé, de préférence réglable, ce dispositif de commande comprenant une bascule de graissage (B2) dont l'entrée de commande (S) est actionnée par ladite sortie (B) du compteur (CO), dont l'entrée de remise à zéro (R) est actionne par une entrée (+P) connectée à un système (P) de contrôle de graissage, et dont la sortie (Q) actionne, d'une part l'entrée de remise à zéro (Z) du compteur (CO), et d'autre part la sortie de commande (+E) de la pompe ou de l'électrovanne (EV) d'actionnement de la pompe, par l'intermédiaire d'une amplification (T, Br, Cr), caractérisé par le fait qu'il comporte une commande de cycle additionnel (M) actionnant (m) l'entrée de commande (S) de la bascule de graissage (B2) en parallèle avec la commande (b) provenant du compteur (CO), par l'intermédiaire d'une porte logique "ou" (OU) et par le fait que le système de contrôle est un pressostat contrôlant l'établissement de la pression en bout de ligne de graissage.

2. Dispositif selon la revendication 1, caractérisé par le fait que le compteur (CO) comporte une sortie intermédiaire (A) correspondant à une décade binaire à cycle intermittent rapide, et que le dispositif comporte une bascule de purge (B1) dont la sortie directe (Q) actionne une porte logique "ET" (ET1) permettant l'envoi des impulsions intermittentes de la sortie intermédiaire (A) du compteur à l'organe d'amplification (T, Br, Cr), en parallèle avec une autre porte logique "ET" (ET2), actionnée par la sortie inverse (Q) de la bascule de purge (B1) et par la sortie directe (Q) de la bascule de graissage (B2), cette bascule de purge (B1) comportant en outre un moyen de commande manuel de purge automatique actionnant son entrée de commande (S) et un moyen de commande manuel de fin de purge actionnant son entrée de remise à zéro (R).

3. Dispositif selon une des revendications précédentes, caractérisé par le fait qu'il comporte un voyant de contrôle (L1) en parallèle avec la sortie de commande (+E), un autre voyant de contrôle (L2) en parallèle avec son entrée de commande (+P) provenant du pressostat, et une temporisation (R3, C3) retardant l'actionnement de l'entrée de remise à zéro (R) de la bascule de graissage (B2) par l'entrée de commande (+P) provenant du pressostat.

4. Dispositif selon les revendication 2 et 3 prises dans leur ensemble, caractérisé par le fait que les trois commandes manuelles sont assurées par un seul bouton de commande (M) qui alimente à la fois l'entrée de commande (S) de la bascule de graissage (B2), en parallèle avec la commande provenant de la sortie principale (B) du compteur (CO), par l'intermédiaire d'une porte logique "ou" (OU), l'entrée de commande (S) de la bascule de purge (B1) par l'intermédiaire d'un circuit intégrateur (R1, C1) retardant la montée du niveau de commande, et l'entrée de remise à zéro (R) de la bascule de purge (B1) par l'intermédiaire d'un circuit dérivateur (R2, C2), ne laissant passer que la brève impulsion d'établissement, l'entrée de remise à zéro (R) de la bascule de graissage (B2) étant en outre connectée par une résistance (R4), à la sortie directe (Q) de la bascule de purge (B1).

5. Dispositif selon la revendication 4, caractérisé par le fait que ladite commande manuelle unique (M) est alimentée (+C) à partir du contact (C) du véhicule, tandis que tous les composants électroniques actifs (CO, B1, B2, ET1, ET2 et OU) sont alimentés directement (+V).

**Patentansprüche**

1. Steuervorrichtung für Zentralschmiereinrichtung mit einer direkt oder indirekt über einen elektrischen Anschluß (+E) und intermittierend mit vorbestimmten Zeitintervallen gesteuerten Versorgungspumpe und mit einem elektronischen numerischen Zähler (CO) mit einem Null-Rücksetzeingang (Z) und einem Hauptausgang (B), der am Ende einer vorzugsweise einstellbaren Zeit aktiv wird, wobei die Steuervorrichtung ein Schmierungs-Flipflop (B2) aufweist, dessen Steuereingang (S) durch den Ausgang (B) des Zählers (CO) betätigt ist, dessen Null-Rücksetzeingang (R) über einen Eingang (+P) betätigt ist, der mit einem Steuerungssystem (P) für die Schmierung verbunden ist, und dessen Ausgang (Q) einerseits den Null-Rücksetzeingang (Z) des Zählers (CO) und andererseits den Steuerausgang (+E) der Pumpe oder des Magnetventils (EV) für die Betätigung der Pumpe über eine Verstärkung (T, Br, Cr) betätigt, dadurch gekennzeichnet, daß die Vorrichtung einen zusätzlichen Steuerzyklus (M) hat, der den Steuereingang (S) des Schmierungs-Flipflops (B2) parallel mit dem vom Zähler (CO) kommenden Befehl (b) über ein logisches ODER-Gatter (OU) betätigt (m), und daß das Steuerungssystem ein Druckgeber (Pressostat) ist, der den Druckaufbau am Ende der Schmierungsleitung steuert.

2. Vorrichtung nach Anspruch 1, dadurch gekennzeichnet, daß der Zähler (CO) einen Zwischenausgang (A) hat, der einer Binärdekade mit raschem intermittierendem Zyklus entspricht, und daß die Vorrichtung ein Reinigungs-Flipflop (B1) aufweist, dessen direkter Ausgang (Q) ein logisches UND-Gatter (ET1) betätigt, das die Lieferung intermitierender Impulse vom Zwischenausgang (A) des Zählers an den Verstärker (T, Br, Cr) erlaubt, parallel zu einem anderen logischen UND-Gatter (ET2), das durch den inversen Ausgang (Q̄) des Reinigungs-Flipflops (B1) und über den direkten Ausgang (Q) des Schmierungs-Flipflops (B2) betätigt ist, wobei dieses Reinigungs-Flipflop (B1) außerdem ein Handsteuermittel für automatische Reinigung, das seinen Steuereingang (S) betätigt, und ein Handsteuermittel für das Ende der Reinigung, das seinen Null-Rücksetzeingang (R) betätigt, hat.

3. Vorrichtung nach einem der vorangehenden Ansprüche, dadurch gekennzeichnet, daß sie ein Steuer-Schauglas (L1) parallel zum Steuerausgang (+E), ein weiteres Steuer-Schauglas (L2) parallel zu ihrem Steuereingang (+P), der vom Druckgeber kommt, und ein Zeitglied (R3, C3), das die Betätigung des Null-Rücksetzeinganges (R) des Schmierungs-Flipflops (B2) über den Steuereingang (+P) vom Druckgeber hat.

4. Vorrichtung nach den Ansprüchen 2 und 3 insgesamt, dadurch gekennzeichnet, daß die drei Handsteuerungen durch einen einzigen Steuerknopf (M) gewährleistet sind, der auf einmal den Steuereingang (S) des Schmierungs-Flipflops (B2) parallel mit dem vom Hauptausgang (B) des Zählers (CO) kommenden Befehl über ein logisches ODER-Gatter (OU), den Steuereingang (S) des Reinigungs-Flipflops über ein Integrierglied (R1, C1), das die Anstiegsflanke des Befehls verzögert/und den Null-Rücksetzeingang (R) des Reinigungs-Flipflops (B1) über ein Differenzierglied (R2, C2) versorgt, indem lediglich der kurze Aufbauimpuls durchgelassen wird, wobei der Null-Rücksetzeingang (R) des Schmierungs-Flipflops (B2) überdies über einen Widerstand (R4) mit dem direkten Ausgang (Q) des Reinigungs-Flipflops (B1) verbunden ist.

5. Vorrichtung nach Anspruch 4, dadurch gekennzeichnet, daß die einzige Handsteuerung (M) ab dem Kontakt (C) des Fahrzeuges versorgt ist (+C), während alle elektronischen Bauteile (CO, B1, B2, ET1, ET2 und ODER) direkt versorgt sind (+V).

**Claims**

1. Control device for a centralised lubrication installation, comprising a feed pump directly or indirectly electrically controlled (+E) and intermittently with predetermined intervals of time, and an electronic numerical counter (CO) comprising an input for resetting to zero (Z) and a principal output (B) which becomes active at the end of a determined time, preferably controllable, this control device comprising a lubricating flip-flop (B2) whose control input (S) is actuated by the said output (B) of the counter (CO), whose input for resetting to zero (R) is actuated by an input (+P) connected to a system (P) for lubrication control, and whose output (Q) actuates, on the one hand, the input for resetting to zero (Z) of the counter (CO), and on the other hand, the control output (+E) of the pump or of the solenoid valve (EV) for actuating the pump, by the intermediary of an amplification circuit (T, Br, Cr), characterised by the fact that it comprises an additional cycle control (M) actuating (m) the control input (S) of the lubricating flip-flop (B2) in parallel with the control (b) issuing from the counter (CO), by the intermediary of a logic "OR" gate (OR), and by the fact that the control system is a manostat controlling the establishment of the pressure at the end of the lubricating line.

2. Device according to claim 1, characterised by the fact that the counter (CO) comprises an intermediary output (A) corresponding to a binary decade with rapid intermittent cycle, and that the device comprises a purging flip-flop (B1) whose direct output (Q) actuates a logic "AND" gate (AND1) enabling the sending of intermittent impulses from the intermediary output (A) of the counter to the amplification circuit (T, Br, Cr), in parallel with another logic "AND" gate (AND2), actuated by the inverse output (Q̄) of the purging flip-flop (B1) and by the direct output (Q) of the lubricating flip-flop (B2), this purging flip-flop (B1) furthermore comprising a manual control means for automatic purging, actuating its control input (S) and a manual control means for ending the purging, actuating its input for resetting to zero (R).

3. Device according to any one of the preceding claims, characterised by the fact that it comprises a control indicator (L1) in parallel with the control output (+E), another control indicator (L2) in parallel with its control input (+P) issuing from the manostat, and a delay (R3, C3) retarding the actuating of the input for resetting to zero (R) of the lubricating flip- flop (B2) by the control input (+P) issuing from the manostat.

4. Device according to claims 2 and 3, considered in their entirety, characterised by the fact that the three manual controls are ensured by one single control switch (M) which simultaneously supplies the control input (S) of the lubricating flip-flop (B2), in parallel with the control issuing from the principal output (B) of the counter (CO), by the intermediary of a logic "OR" gate (QR), the control input (S) of the purging flip-flop (B1) by the intermediary of an integrator circuit (R1, C1), retarding the rise of the control level, and the input for resetting to zero (R) of the purging flip-flop (B1), by the intermediary of a differentiating circuit (R2, C2), only allowing the brief establishment impulse to pass, the input for resetting to zero (R) of the lubricating flip-flop (B2) being furthermore connected, by a resistor (R4), to the direct output (Q) of the purging flip-flop (B1).

5. Device according to claim 4, characterised by the fact that the said sole manual control (M) is supplied (+C) through the contact (C) of the vehicle, whereas all the active electronic components (CO, B1, B2, AND1, AND2, and OR) are supplied directly (+V).